# EUROPÄISCHE PATENTANMELDUNG

(11) **EP 2 801 882 A2**
(43) Veröffentlichungstag der Anmeldung: **12.11.2014**
(21) Anmeldenummer: 14167333.5
(22) Anmeldetag: 07.05.2014
(51) Int. Cl.: G05D 23/02

(54) **Thermostat**

(30) Priorität: 07.05.2013 DE 102013208412
(71) Anmelder: Behr Thermot-tronik GmbH, 70806 Kornwestheim (DE)
(72) Erfinder: Klein, Dr. Hans-Peter, 71397 Leutenbach (DE); Willers, Dr. Eike, 70469 Stuttgart (DE)
(74) Vertreter: Grauel, Andreas

(57) **Zusammenfassung**

Die Erfindung betrifft ein Thermostat mit einem Hohlkörper (2, 23, 38, 53), wobei der Hohlkörper (2, 23, 38, 53) zumindest teilweise mit einem thermosensiblen Medium (5, 14, 34, 54) gefüllt ist, wobei ein Heizelement (3, 15, 35, 55) zur Erwärmung des thermosensiblen Mediums (5, 14, 34, 54) vorgesehen ist, wobei das Heizelement (5, 14, 34, 54) außerhalb des Hohlkörpers (2, 23, 38, 53) angeordnet ist und vom Hohlkörper (2, 23, 38, 53) zumindest teilweise elektrisch isoliert ist, wobei es thermisch leitend mit dem Hohlkörper (2, 23, 38, 53) verbunden ist.

## Beschreibung

### Technisches Gebiet

Die Erfindung betrifft ein Thermostat mit einem Hohlkörper, wobei der Hohlkörper zumindest teilweise mit einem thermosensiblen Medium gefüllt ist, wobei ein Heizelement zur Erwärmung des thermosensiblen Mediums vorgesehen ist.

### Stand der Technik

Kühlsysteme in Kraftfahrzeugen können unter anderem einen Verbrennungsmotor, einen Wärmeübertrager, eine Umwälzpumpe und ein Regelorgan aufweisen. Das Regelorgan kann dabei die Durchströmung der Komponenten mit einem Kühlmittel abhängig von der Temperatur des Kühlmittels beeinflussen. Dabei wird insbesondere die Durchströmung des Wärmeübertragers, welcher oft als ein Kühlmittelkühler ausgestaltet ist, durch das Regelorgan beeinflusst. Das Regelorgan kann dabei durch ein Thermostatventil gebildet sein.

Ein Thermostatventil kann dabei ein Dehnstoffelement aufweisen, welches aufgrund der temperaturabhängigen Volumenausdehnung eines temperatursensiblen Mediums eine Verschiebung eines Stellgliedes verursacht. Die Position des Stellgliedes beeinflusst dabei den Strömungsweg des Kühlmittels innerhalb des Kühlsystems.

Üblicherweise werden die thermosensiblen Medien für ein Thermostat anhand der Betriebszustände und der damit einhergehenden Wärmeentwicklung des Verbrennungsmotors ausgelegt.

Insbesondere in Betriebszuständen des Verbrennungsmotors, in denen nur eine Teillast vom Verbrennungsmotor abgefordert wird, kann eine zu starke Kühlung des Verbrennungsmotors entstehen, was zu einer nicht optimalen Betriebstemperatur des Verbrennungsmotors führt.

Um diesem Problem zu begegnen, wurden elektrisch beheizbare Thermostatventile entwickelt. Solche Thermostatventile werden auch als Kennfeldthermostatventile bezeichnet. Zur Beheizung können beispielsweise sogenannte PTC-Elemente (Positive-Temperature-Coefficient-Elemente) eingesetzt werden. Durch die elektrische Beheizung kann insbesondere im Volllastbetrieb der Phasenübergang des thermosensiblen Materials in gewissen Grenzen unabhängig von der Temperatur des Kühlmittels erfolgen.

Die Druckschrift DE 101 10 185 A1 offenbart beispielsweise ein elektrisch beheizbares Thermostatventil. Bei diesem ist ein Heizelement auf einem Kunststoffsockel aufgebracht. Die elektrischen Kontaktierungen sind dabei durch den Sockel hindurchgeführt. Der Sockel selbst ist dabei in das Behältnis eingesteckt, welches das thermosensible Medium enthält.

Nachteilig an den Lösungen im Stand der Technik ist insbesondere, dass die Abdichtung des Behältnisses, welches das thermosensible Medium enthält, schwierig ist. Dies gilt sowohl für die Schnittstelle des Behältnisses mit dem Sockel als auch für die Durchführung der elektrischen Kontaktierungen in den Sockel bzw. in das Behältnis.

### Darstellung der Erfindung, Aufgabe, Lösung, Vorteile

Es ist die Aufgabe der vorliegenden Erfindung ein Thermostat bereitzustellen, welches eine im Vergleich zu den Lösungen aus dem Stand der Technik verbesserte Anbindung eines Heizelementes aufweist.

Die Aufgabe des Thermostats wird durch ein Thermostat mit den Merkmalen des Anspruchs 1 gelöst.

Ein Ausführungsbeispiel der Erfindung betrifft ein Thermostat mit einem Hohlkörper, wobei der Hohlkörper zumindest teilweise mit einem thermosensiblen Medium gefüllt ist, wobei ein Heizelement zur Erwärmung des thermosensiblen Mediums vorgesehen ist, wobei das Heizelement außerhalb des Hohlkörpers angeordnet ist und vom Hohlkörper zumindest teilweise elektrisch isoliert ist, wobei es thermisch leitend mit dem Hohlkörper verbunden ist.

Mit Thermostat ist hier insbesondere ein Thermostat zur Regelung des Kühlmittelflusses in einem Kühlkreislauf eines Kraftfahrzeugs mit Verbrennungsmotor gemeint. Alternativ sind jedoch auch Anwendungen in anderen Fluidkreisläufen vorsehbar.

Der beschriebene Hohlkörper beinhaltet ein thermosensibles Medium und wird in der Literatur regelmäßig als Dehnstoffelement bezeichnet. Der Hohlkörper bildet dabei die räumliche Begrenzung für den Dehnstoff. Der Dehnstoff ist durch ein thermosensibles Medium gebildet. Über eine Ausdehnung des thermosensiblen Mediums kann ein Kolbenelement verschoben werden. Der Hohlkörper kann dabei vorteilhafterweise eine zylindrische Form aufweisen.

Mit einem thermosensiblen Medium ist hier ein Medium gemeint, welches sich infolge von Temperaturänderungen ausdehnt bzw. zusammenzieht. Dies kann beispielsweise ein Wachs sein, welches bei einem Phasenübergang von einer festen Phase in eine flüssige Phase eine besonders starke Volumenänderung erfährt. Auch andere Medien, die ausreichend große Volumenänderungen bei entsprechender Temperatureinwirkung erfahren, können alternativ vorgesehen werden. Vorteilhafterweise ist die Volumenänderung reversibel, so dass bei einer geeigneten Temperaturveränderung auch der Ausgangszustand wieder erreicht werden kann. Hierzu kann zusätzlich ein Aktuator, wie beispielsweise eine Feder, vorgesehen sein, die beispielsweise auf das Kolbenelement einwirkt und eine Rückkehr in den Ausgangszustand unterstützt.

Ein Heizelement ist vorteilhafterweise außerhalb des Hohlkörpers angeordnet, da im Vergleich zu einer Anordnung des Heizelementes innerhalb des Hohlkörpers keine Öffnungen im Hohlkörper vorgesehen werden müssen, die eine elektrische Kontaktierung des Heizelementes erlauben.

In einer alternativen Ausführungsform der Erfindung kann es vorgesehen sein, dass der Hohlkörper mehrteilig ausgeführt ist, wobei ein erstes Gehäuseteil des Hohlkörpers als topfförmige Hülse ausgebildet ist, welche in einen Hohlraum des Hohlkörpers hineinragt.

Über eine solche Ausgestaltung eines Gehäuseteils des Hohlkörpers kann erreicht werden, dass die topfförmige Hülse derart in den Hohlraum des Hohlkörpers hineinragt, dass die topfförmige Hülse von dem thermosensiblen Medium, welches sich im Hohlraum des Hohlkörpers befindet, bereichsweise umschlossen wird. Auf diese Weise kann ein verbesserter Wärmeübertrag von einem Heizelement, welches innerhalb der topfförmigen Hülse angeordnet ist, auf das thermosensible Medium erreicht werden, da die Wärmeübertragungsfläche vergrößert ist.

Weiterhin kann es besonders vorteilhaft sein, wenn ein zweites Gehäuseteil als topfförmiges Gehäuseteil ausgebildet ist, wobei die topfförmige Hülse und/oder das topfförmige Gehäuseteil an einem offenen Endbereich einen radial umlaufenden Flansch aufweisen und die topfförmige Hülse in den offenen Endbereich des topfförmigen Gehäuseteils einführbar ist und mit dem topfförmigen Gehäuseteil an den Endbereichen verbindbar ist.

Die Hülse und das Gehäuseteil können durch die oben beschriebene Gestaltung und Positionierung zueinander derart angeordnet werden, dass zwischen Hülse und Gehäuseteil ein Hohlraum ausgebildet wird, der von einem thermosensiblen Medium ganz oder teilweise gefüllt ist. Der Aufbau des Hohlkörpers ist besonders einfach und die verwendeten Teile können auf einfache Art und Weise hergestellt werden.

Mit dem offenen Endbereich ist sowohl für die topfförmige Hülse als auch für das topfförmige Gehäuseteil ein Endbereich gemeint, der nach außen hin offen ist. Gewöhnlich ist ein topfförmiger Körper fünfseitig geschlossen und einseitig offen, wodurch sich die topfförmige Gestalt ergibt. Sowohl die Hülse als auch das Gehäuseteil können dabei in einer bevorzugten Ausführung zylindrisch sein. In diesem Fall liegt der offene Endbereich vorzugsweise jeweils an einem axialen Ende der Hülse bzw. des Gehäuseteils.

Auch kann es zweckmäßig sein, wenn das Verhältnis zwischen dem Innendurchmesser des topfförmigen Gehäuseteils und dem Außendurchmesser der topfförmigen Hülse in einem Bereich größer als 1 und kleiner als 2,5 liegt.

Durch ein oben beschriebenes Verhältnis der Durchmesser zueinander wird sichergestellt, dass auch in den sich zwischen der Hülse und dem Gehäuseteil ergebenden Spalt im Inneren des Hohlraums das thermosensible Medium einfließen kann. Dies verbessert die Wärmeübertragung vom Heizelement hin zum thermosensiblen Medium.

In einer alternativen Ausgestaltung der Erfindung kann es vorgesehen sein, dass die topfförmige Hülse mit dem topfförmigen Gehäuseteil fluiddicht verbunden ist, wobei eine elektrische Isolation zwischen der topfförmigen Hülse und dem topfförmigen Gehäuseteil angeordnet ist.

Eine fluiddichte Verbindung ist besonders vorteilhaft, da so ein ungewolltes Austreten des thermosensiblen Mediums aus dem von der Hülse und dem Gehäuseteil gebildeten Hohlraum vermieden wird. Eine Verbindung zwischen der Hülse und dem Gehäuseteil kann beispielsweise durch Verkleben, Verschrauben, Umbördeln oder Verschweißen erreicht werden.

Durch die Anordnung einer elektrischen Isolation zwischen der Hülse und dem Gehäuseteil kann die Entstehung eines Kurzschlusses verhindert werden. Dies ist insbesondere dann wichtig, wenn die Hülse oder das Gehäuseteil an einen Stromkreis angeschlossen sind. Dies kann beispielsweise durch eine Anbindung eines unter Spannung stehenden Heizelementes geschehen.

Weiterhin ist es vorteilhaft, wenn das Heizelement in einem in den Hohlraum hineinragenden Bereich der topfförmigen Hülse angeordnet ist, wobei zwischen dem Heizelement und der topfförmigen Hülse eine elektrisch isolierende Schicht und/oder eine thermisch leitfähige Schicht angeordnet ist.

Eine Anordnung des Heizelementes innerhalb des Bereichs der Hülse, der in den Hohlraum hineinragt ist besonders vorteilhaft, da so ein besonders guter Wärmeübertrag auf das thermosensible Medium zu erreichen ist. Im regulären Betrieb kann es vorkommen, dass der Hohlkörper von einer Kühlflüssigkeit umströmt wird. Um einen ungewollten Wärmeübertrag von dem Heizelement direkt auf die Kühlflüssigkeit zu vermeiden, ist die Anordnung des Heizelementes in dem in den Hohlraum hineinragenden Bereich der topfförmigen Hülse besonders vorteilhaft, da das Heizelement so weitestgehend von der Kühlflüssigkeit getrennt ist.

Vorteilhafterweise ist eine elektrische Isolation zwischen dem Heizelement und der Hülse vorgesehen, um das Entstehen von Kurzschlüssen zu vermeiden. Eine thermisch leitfähige Schicht ist besonders vorteilhaft, um die vom Heizelement erzeugte Wärme vorteilhafter auf die Hülse bzw. das thermosensible Medium zu übertragen.

Eine elektrische Isolation kann vorteilhafterweise mit einer Metalloxidkeramik, wie beispielsweise Aluminiumoxid, erreicht werden. Vorteilhaft ist es dabei insbesondere, wenn die elektrische Isolation trotzdem eine möglichst gute thermische Leitfähigkeit aufweist. Vorzugsweise sollte die thermische Leitfähigkeit größer als 2 W/mK sein.

Das zur Isolation verwendete Metalloxidpulver kann vorteilhafterweise verdichtet sein, um einen optimale Wärmeleitfähigkeit zu erzielen. Die Verdichtung kann dabei entweder durch eine äußere Einwirkung erfolgen oder beispielsweise durch den Montageprozess der topfförmigen Hülse im topfförmigen Gehäuseteil erzeugt werden. Dies kann insbesondere durch das Vorsehen von Presspassungen erreicht werden. Alternativ kann auch ein Formteil aus thermoplastischem Kunststoff derart in die Hülse oder das Gehäuseteil eingeführt werden, dass eine Verdichtung der Metalloxidkeramik entsteht.

Weiterhin ist es zu bevorzugen, wenn der Hohlkörper im Wesentlichen aus einem Material gefertigt ist, welches eine Wärmeleitfähigkeit von weniger als 50 W/mK aufweist, dabei vorzugsweise von weniger als 25 W/mK.

Durch eine geringe Wärmeleitfähigkeit des Hohlkörpers kann ein Wärmeabtransport vom Hohlkörper und damit von dem thermosensiblen Medium weg verringert werden. Die Wärmeleitfähigkeit von einfachen Stählen liegt dabei regelmäßig in einem Bereich von 40 W/mK bis 50 W/mK. Die Wärmeleitfähigkeit von Edelstählen, welche besonders zu bevorzugen sind, liegt regelmäßig bei Werten von 15 W/mK bis 25 W/mK. Dies ist besonders vorteilhaft, weil dadurch geringere Wärmemengen ausreichen, um eine gewünschte Volumenänderung des thermosensiblen Mediums hervorzurufen. Der Verlust an Wärme durch ungewollte Abstrahlung vom Hohlkörper weg wird durch eine möglichst niedrige Wärmeleitfähigkeit des Hohlkörpers minimiert.

Auch ist es zweckmäßig, wenn das Heizelement mittels eines elektrisch isolierenden und thermisch leitenden Klebemittels an einer Außenfläche des Hohlkörpers befestigt ist.

Ein elektrisch isolierendes und gleichzeitig thermisch leitendes Klebemittel ist besonders vorteilhaft, da sowohl die elektrische Isolation als auch die thermische Leitfähigkeit durch nur ein zusätzliches Mittel erzeugt werden. Gleichzeitig wird darüber sichergestellt, dass die thermische Anbindung des Heizelementes an den Hohlkörper besonders vorteilhaft ist und die auftretenden Verluste möglichst gering gehalten werden.

Darüber hinaus ist es zu bevorzugen, wenn das Heizelement durch ein PTC-Heizelement gebildet ist.

Ein PTC-Heizelement (Positive-Temperature-Coefficient-Heizelement) ist besonders vorteilhaft, da es auf einfache Weise herstellbar ist und in eine nahezu beliebige Form gebracht werden kann. Sowohl eine Reihenschaltung als auch eine Parallelschaltung von einzelnen PTC-Heizelementen ist möglich, wodurch auf einfache Weise auch unterschiedliche Heizleistungen erzeugt werden können. Zusätzlich ist der Effekt, dass die PTC-Heizelemente ihre Heizleistung in Abhängigkeit von der erreichten Temperatur selbst regeln, besonders vorteilhaft.

Falls die PTC-Heizelemente scheibenförmig sind, ist es besonders zu bevorzugen, wenn das Verhältnis zwischen Durchmesser und Dicke der Scheibe zwischen 2 und 25 liegt.

Auch ist es zu bevorzugen, wenn das Heizelement durch einen auf bzw. an einem Formkörper angeordneten Heizdraht und/oder ein Heizblech gebildet ist.

Ein Heizelement mit einem in oder an einem Formkörper angeordneten Heizdraht ist besonders vorteilhaft, da die Gestaltung des Heizelements besonders einfach ist und eine nahezu unbegrenzte Variantenvielfalt erzeugt werden kann. Die gleichen Vorteile gelten analog für ein Heizblech. Über beide Heizelemente kann besonders der in den Hohlraum hineinragende Bereich der Hülse gut ausgefüllt werden.

Eine elektrische Isolation kann beispielsweise durch eine Laminierung bzw. durch einen Überzug mit einem elektrisch nicht leitenden Material, wie beispielsweise Kapton erfolgen. Besonders vorteilhaft sind hierbei Materialien, welche ausreichend widerstandsfähig gegenüber den korrosiven Einflüssen der Kühlflüssigkeit ausgelegt sind und auch Temperaturen von über 220° Celsius aushalten. Vorteilhafte Materialien sind beispielsweise Thermoplaste, wie Polytetrafluorethylen (PTFE) oder Polyetheretherketon (PEEK).

Der Formkörper kann vorteilhafterweise aus einem elektrisch nicht leitenden Material, wie beispielsweise einer Metalloxidkeramik, gebildet sein.

Darüber hinaus kann es vorteilhaft sein, wenn das Heizelement mit einem Formteil verbunden ist, welches Durchführungen für die elektrischen Kontaktierungen des Heizelementes aufweist.

Vorteilhafterweise ist das Heizelement mit einem Formteil derart verbunden, dass das Heizelement vorteilhaft am Hohlkörper positioniert werden kann. Hierzu weist das Formteil vorzugsweise Öffnungen auf, durch welche die elektrischen Kontaktierungen geführt werden können.

Ein bevorzugtes Ausführungsbeispiel ist dadurch gekennzeichnet, dass der Hohlkörper eine Öffnung aufweist, welche dem Heizelement im Wesentlichen gegenüberliegend angeordnet ist, wobei durch die Öffnung ein Kolbenelement geführt ist, welches in der Öffnung beweglich gelagert ist, wobei eine aus einer Volumenänderung des thermosensiblen Mediums resultierende Kraftkomponente auf das Kolbenelement übertragbar ist.

Ein Kolbenelement, welches durch eine Öffnung entweder direkt in das thermosensible Material geführt ist oder über einen Elastomereinsatz von dem thermosensiblen Material getrennt ist, ist vorteilhaft, um die durch die Volumenausdehnung des thermosensiblen Materials entstehende Kraftkomponente auf das Kolbenelement umzuleiten. Das Kolbenelement kann dann seinerseits die Kraftkomponente vorteilhafterweise auf nachgelagerte Elemente übertragen. Zu diesen zählen insbesondere Ventilteller und Stellmittel des Thermostats.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig.1: eine schematische Schnittansicht durch einen erfindungsgemäßen Hohlkörper mit einem Heizelement, welches über ein Klebemittel angebundenem ist, wobei das Klebemittel elektrisch isolierend und thermisch leitend ist,
- Fig. 2: eine schematische Schnittansicht durch einen mehrteiligen Hohlkörper, wobei in die topfförmige Hülse ein Heizelement eingeführt ist und zwischen dem topfförmigen Gehäuseteil und der topfförmigen Hülse eine elektrische Isolation vorgesehen ist,
- Fig. 3: eine schematische Schnittansicht durch einen mehrteiligen Hohlkörper gemäß Fig. 2, wobei eine elektrische Isolation nur zwischen dem Heizelement und der Außenwandung der topfförmigen Hülse vorgesehen ist, und
- Fig. 4: eine schematische Schnittansicht eines Hohlkörpers mit einem einen Ohmschen Widerstand aufweisenden Heizelement, wobei der Hohlkörper und das Heizelement über ein Formteil an einem Gehäuse abgestützt ist.

### Bevorzugte Ausführung der Erfindung

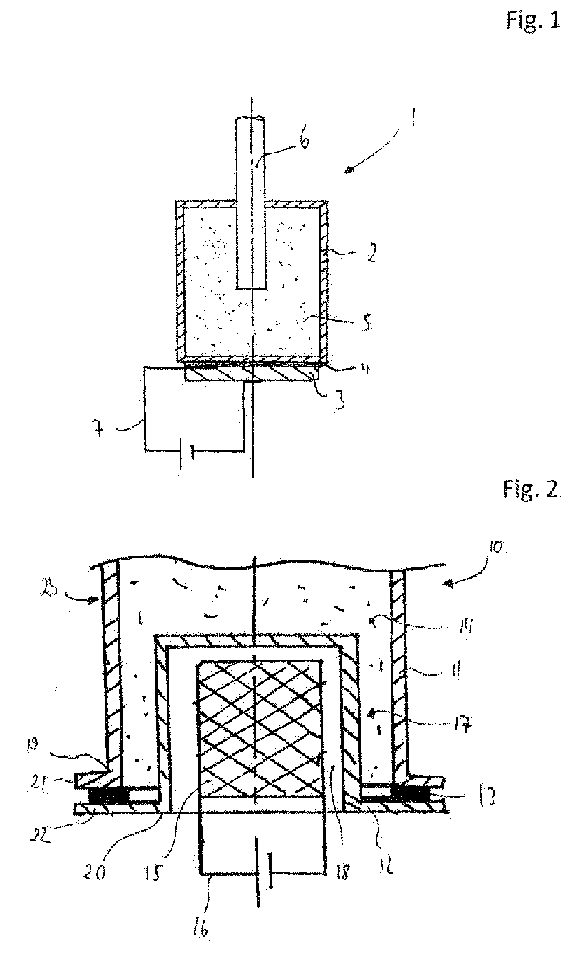

Die Fig. 1 zeigt eine schematische Schnittansicht eines Dehnstoffelements 1. Das Dehnstoffelement 1 weist einen Hohlkörper 2 auf, welcher mit einem thermosensiblen Material 5 gefüllt ist. Der Hohlkörper 2 kann vorteilhafterweise eine zylindrische Grundform aufweisen. Auch andere Ausgestaltungen, wie beispielsweise quaderförmige oder kugelförmige Hohlkörper sind in alternativen Ausführungsformen vorsehbar.

Der Hohlkörper 2 weist an seiner oberen Fläche eine Öffnung auf, welche von einem Kolbenelement 6 durchdrungen ist. Das Kolbenelement 6 kann infolge einer Volumenänderung des thermosensiblen Mediums 5 im Inneren des Hohlkörpers 2 auf- bzw. abbewegt werden.

Unterhalb des Hohlkörpers 2 ist ein plattenförmiges Heizelement 3 vorgesehen, welches über ein Klebemittel 4 an einer Außenfläche des Hohlkörpers 2 befestigt ist. Das Klebemittel 4 ist dabei elektrisch isolierend und thermisch leitend. Auf diese Weise kann die Wärme vom Heizelement 3 vorteilhaft auf den Hohlkörper 2 und insbesondere auf das thermosensible Medium 5 übertragen werden. Gleichzeitig ist durch die elektrische Isolierung ein Kurzschluss ausgeschlossen.

Das Heizelement 3 ist vorteilhafterweise ein PTC-Heizelement. Es ist über einen Stromkreis 7 mit einer Spannungsquelle verbunden.

In alternativen Ausführungen kann das Heizelement 3 beispielsweise auch topfförmig ausgeführt sein und einen unteren Bereich des Hohlkörpers 2 umfassen.

Die Fig. 2 zeigt eine weitere schematische Schnittansicht eines alternativen Dehnstoffelements 10. Das Dehnstoffelement 10 besteht aus einem topfförmigen Gehäuseteil 11 sowie einer topfförmigen Hülse 12.

Die topfförmige Hülse 12 ist durch einen offenen Bereich 19 des topfförmigen Gehäuseteils 11 in den von dem topfförmigen Gehäuseteil 11 gebildeten Hohlraum eingeschoben. Sowohl das topfförmige Gehäuseteil 11 als auch die topfförmige Hülse 12 weisen an ihren offenen Endbereichen 19 bzw. 20 einen umlaufenden Flansch 21 bzw. 22 auf. Über die beiden Flansche 21 bzw. 22 ist das topfförmige Gehäuseteil 11 mit der topfförmigen Hülse 12 verbunden.

Zwischen die Verbindungsstelle ist eine elektrische Isolation 13 eingebracht. Auf diese Weise ist die topfförmige Hülse 12 von dem topfförmigen Gehäuseteil 11 elektrisch isoliert.

Im Inneren des topfförmigen Gehäuseteils 11 ist ein thermosensibles Medium 14 angeordnet. Das topfförmige Gehäuseteil 11 und die topfförmige Hülse 12 bilden zusammen den Hohlkörper 23 aus.

Zwischen der Außenfläche der topfförmigen Hülse 12 und der Innenfläche des topfförmigen Gehäuseteils 11 bildet sich ein umlaufender Ringspalt 17 aus, welcher ebenfalls mit dem thermosensiblen Material 14 gefüllt ist.

Je nach Ausgestaltung der topfförmigen Hülse 12 und des topfförmigen Gehäuseteils 11 kann der Ringspalt 17 zylindrisch oder in einer anderweitigen Form, welche sich durch die Beabstandung der Innenfläche des topfförmigen Gehäuseteils 11 und der Außenfläche der topfförmigen Hülse 12 ergibt, gestaltet sein.

In die topfförmige Hülse 12 ist ein Heizelement 15 eingeführt. Dieses ist über einen Stromkreis 16 mit einer Spannungsquelle verbunden. Zwischen dem Heizelement 15 und der topfförmigen Hülse 12 ist ein Luftspalt 18 dargestellt. Dieser kann je nach Gestaltung des Heizelements 5 relativ zur topfförmigen Hülse 12 variieren. Durch die elektrische Isolation 13 kann das Heizelement 15 auch direkt flächig an der topfförmigen Hülse 12 anliegen.

Durch ein Einschieben des Heizelements 15 in die topfförmige Hülse 12 wächst insgesamt die Wärmeübergangsfläche zwischen dem Heizelement 15 und der topfförmigen Hülse 12 und damit auch mit dem thermosensiblen Medium 14.

Die topfförmige Hülse 12 und das topfförmige Gehäuseteil 11 können beispielsweise als Tiefziehteil, als Drehteil oder als Gussteil ausgebildet sein. Die Fig. 2 beschränkt die Möglichkeiten der Ausführungen dieser beiden Elemente nicht.

Das Heizelement 15 kann wie in Fig. 2 gezeigt ebenfalls zylinderförmig aufgebaut sein, es kann jedoch auch abhängig von der Formgebung der topfförmigen Hülse an den Innendurchmesser der topfförmigen Hülse angepasst sein.

In alternativen Ausführungsformen wäre beispielsweise auch eine Staffelung von mehreren Heizelementen, wie sie bereits in Fig. 1 gezeigt wurden, innerhalb der topfförmigen Hülse denkbar.

Das Einbringen des Heizelements 15 ins Innere der topfförmigen Hülse 12 ist insbesondere vorteilhaft, da der Wärmeübertrag so in direktem Wege durch die topfförmige Hülse 12 zum thermosensiblen Medium 14 stattfinden kann. Der Anteil an Wärme, welcher auf ein möglicherweise um das Dehnstoffelement 10 strömendes Kühlmedium übergehen würde, ist dadurch deutlich reduziert.

In einer besonders vorteilhaften Ausführung weist insbesondere die topfförmige Hülse 12 eine im Vergleich zum topfförmigen Gehäuseteil 11 größere Wärmeleitfähigkeit auf. Dadurch ist sichergestellt, dass der Wärmeübertrag vom Heizelement 15 auf das thermosensible Medium 14 verbessert wird.

Das topfförmige Gehäuseteil 11 weist seinerseits einen möglichst geringen Wärmeleitkoeffizienten auf, um zu verhindern, dass Wärme vom thermosensiblen Medium 14 oder vom Heizelement 15 direkt an ein Kühlmedium abgegeben wird, welches das Dehnstoffelement 10 im Betrieb umströmt.

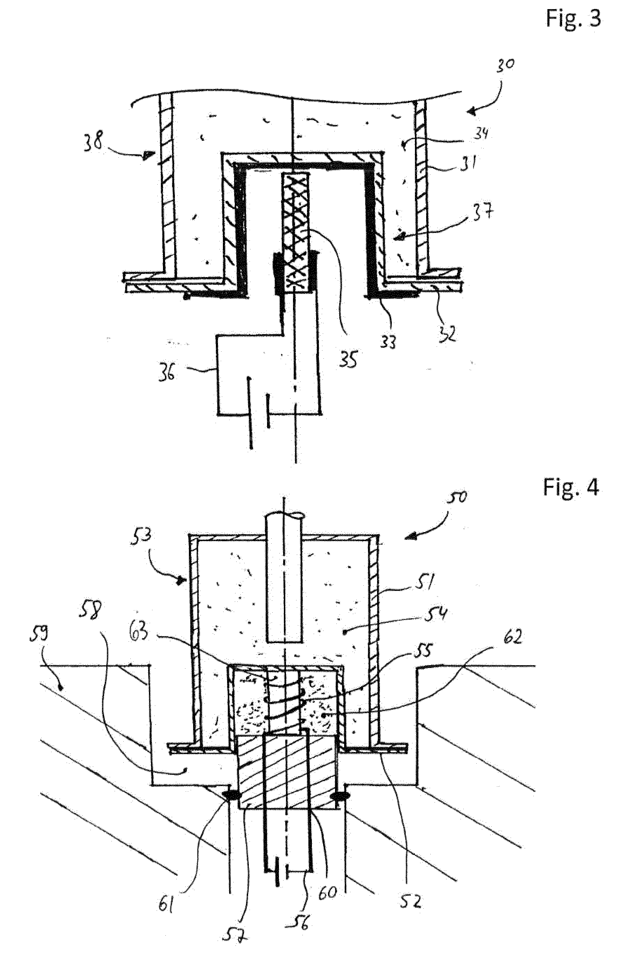

Die Fig. 3 zeigt eine weitere schematische Schnittansicht eines Dehnstoffelements 30. Wie bereits in Fig. 2 gezeigt ist der Hohlkörper 38 aus einem topfförmigen Gehäuseteil 31 und einer darin eingeschobenen topfförmigen Hülse 32 gebildet. Zwischen den beiden Elementen ist ebenfalls ein Ringspalt 37 gebildet, welcher sich an der Formgebung der topfförmigen Hülse 32 relativ zum topfförmigen Gehäuseteil 31 orientiert.

Im Inneren des Hohlkörpers 38 ist ein thermosensibles Medium 34 angeordnet.

Im Unterschied zur Fig. 2 sind nun die Flansche der topfförmigen Hülse 32 und des topfförmigen Gehäuseteils 31 direkt miteinander verbunden und nicht über eine elektrische Isolation voneinander getrennt.

Die Verbindung zwischen dem topfförmigen Gehäuseteil 31 und der topfförmigen Hülse 32 kann in den Fig. 2 bis 4 beispielsweise durch Verkleben, Verschweißen, Verbördeln, Verschrauben oder Verklemmen erfolgen.

Die Innenfläche der topfförmigen Hülse 32 ist mit einer elektrischen Isolation 33 versehen. Die Innenfläche der topfförmigen Hülse 32 beschreibt hierbei die dem Hohlraum des Hohlkörpers 38 abgewandte Fläche. Dies kann beispielsweise über eine Folie aus dem Material Kapton geschehen. Über die elektrische Isolation 33 ist sichergestellt, dass zwischen dem in die topfförmige Hülse 32 eingeführten Heizelement 35 und der topfförmigen Hülse 32 kein elektrischer Kurzschluss entsteht. Weiterhin hat das Material Kapton die Eigenschaft, den Wärmetransport nicht zu behindern.

Das Heizelement 35 ist über einen Stromkreis 36 mit einer Spannungsquelle verbunden. Das Heizelement 35 kann ebenfalls durch ein PTC-Heizelement gebildet sein oder durch eine Mehrzahl von miteinander verschalteten PTC-Heizelementen.

Die Fig. 4 zeigt eine alternative Ausführungsform eines Dehnstoffelements 50. Dieses ist wie in den vorausgegangenen Fig. 2 und 3 aus einem topfförmigen Gehäuseteil 51 und einer topfförmigen Hülse 52 gebildet. Das Dehnstoffelement 50 bzw. der Hohlkörper 53 sind mit einem thermosensiblen Medium 54 gefüllt. Die obere Fläche des Dehnstoffelements 50 ist von einem Kolbenelement durchdrungen.

Im Unterschied zu den vorausgegangenen Figuren ist nun das Heizelement 55 nicht durch ein PTC-Heizelement gebildet, sondern durch einen Heizdraht, welcher um einen Formkörper 63 gewickelt ist. Das Heizelement 55 erzeugt somit eine Wärme infolge des Ohmschen Widerstands des Heizdrahtes. Der Zwischenraum zwischen dem Heizelement 55 und der topfförmigen Hülse 52 ist mit einem elektrisch nicht leitenden und thermisch leitenden Material 62 gefüllt. Durch ein Formteil 57 ist der offene Bereich der topfförmigen Hülse 52 nach unten hin angeschlossen. Somit wird das elektrisch nicht leitende und thermisch leitende Material 62 im von der topfförmigen Hülse 52 eingeschlossenen Bereich um das Heizelement 55 gehalten.

In alternativen Ausführungsformen kann anstelle des aufgewickelten Heizdrahtes auch ein Heizblech vorgesehen sein oder eine anderweitige Anordnung eines Elements, welches über einen Ohmschen Widerstand Wärme erzeugt.

Alternativ kann auch eine Einzahl oder eine Mehrzahl von PTC-Heizelementen vorgesehen sein.

Das Formteil 57 weist Aussparungen 60 auf, durch welche die elektrischen Kontaktierungen des Stromkreises 56 verlaufen, worüber das Heizelement 55 mit einer Spannungsquelle verbunden ist. Die Gesamtheit des Dehnstoffelements 50 mit dem eingesetzten Formteil 57 ist in ein Gehäuse 59 eingesetzt. Dabei ist es über ein Dichtelement 61 gegenüber den Wandungen des Gehäuses 59 abgestützt. Zwischen dem Dehnstoffelement 50 und dem Gehäuse 59 ist ein Luftspalt 58 vorgesehen, welcher eine thermische und elektrische Isolation des Dehnstoffelements 50 gegenüber der Umgebung bildet.

Den Fig. 2 bis 4 ist gemein, dass das Heizelement 15, 35, 55 jeweils in den Innenraum der topfförmigen Hülse 12, 32, 52 eingeschoben ist. Dadurch wird insgesamt jeweils die Wärmeübertragungsfläche zwischen dem Heizelement 15, 35, 55 und der topfförmigen Hülse 12, 32, 52 vergrößert und der Wärmeübertrag auf das jeweilige thermosensible Medium 14, 34, 54 im Inneren der Hohlkörper 23, 38, 53 wird verbessert. Gleichzeitig wird der ungewollte Wärmeverlust an ein Kühlmedium, welches die jeweiligen Dehnstoffelemente 10, 30, 50 umströmt, minimiert.

Alle in den Fig. 1 bis 4 gezeigten Ausführungsbeispiele sind beispielhaft und dienen der Beschreibung des Erfindungsgedankens. Sie sind untereinander kombinierbar und weisen keinen beschränkenden Charakter auf.

## Patentansprüche

1. Thermostat mit einem Hohlkörper (2, 23, 38, 53), wobei der Hohlkörper (2, 23, 38, 53) zumindest teilweise mit einem thermosensiblen Medium (5, 14, 34, 54) gefüllt ist, wobei ein Heizelement (3, 15, 35, 55) zur Erwärmung des thermosensiblen Mediums (5, 14, 34, 54) vorgesehen ist, **dadurch gekennzeichnet, dass** das Heizelement (5, 14, 34, 54) außerhalb des Hohlkörpers (2, 23, 38, 53) angeordnet ist und vom Hohlkörper (2, 23, 38, 53) zumindest teilweise elektrisch isoliert ist, wobei es thermisch leitend mit dem Hohlkörper (2, 23, 38, 53) verbunden ist.

2. Thermostat nach Anspruch 1, **dadurch gekennzeichnet, dass** der Hohlkörper (23, 38, 53) mehrteilig ausgeführt ist, wobei ein erstes Gehäuseteil des Hohlkörpers (23, 38, 53) als topfförmige Hülse (12, 32, 52) ausgebildet ist, welche in einen Hohlraum des Hohlkörpers (23, 38, 53) hineinragt.

3. Thermostat nach Anspruch 2, **dadurch gekennzeichnet, dass** ein zweites Gehäuseteil als topfförmiges Gehäuseteil (11, 31, 51) ausgebildet ist, wobei die topfförmige Hülse (12, 32, 52) und/oder das topfförmige Gehäuseteil (11, 31, 51) an einem offenen Endbereich (19, 20) einen radial umlaufenden Flansch (21, 22) aufweisen und die topfförmige Hülse (12, 32, 52) in den offenen Endbereich (19) des topfförmigen Gehäuseteils (11, 31, 51) einführbar ist und mit dem topfförmigen Gehäuseteil (11, 31, 51) an den Endbereichen (19, 20) verbindbar ist.

4. Thermostat nach Anspruch 2 oder 3, **dadurch gekennzeichnet, dass** das Verhältnis zwischen dem Innendurchmesser des topfförmigen Gehäuseteils (11, 31, 51) und dem Außendurchmesser der topfförmigen Hülse (12, 32, 52) in einem Bereich größer als 1 und kleiner als 2,5 liegt.

5. Thermostat nach einem der vorhergehenden Ansprüche 2 bis 4, **dadurch gekennzeichnet, dass** die topfförmige Hülse (12, 32, 52) mit dem topfförmigen Gehäuseteil (11, 31, 51) fluiddicht verbunden ist, wobei eine elektrische Isolation (13) zwischen der topfförmigen Hülse (12) und dem topfförmigen Gehäuseteil (11) angeordnet ist.

6. Thermostat nach einem der vorhergehenden Ansprüche 2 bis 5, **dadurch gekennzeichnet, dass** das Heizelement (35, 55) in einem in den Hohlraum hineinragenden Bereich der topfförmigen Hülse (32, 52) angeordnet ist, wobei zwischen dem Heizelement (35, 55) und der topfförmigen Hülse (32, 52) eine elektrisch isolierende Schicht (33, 62) und/oder eine thermisch leitfähige Schicht (33, 62) angeordnet ist.

7. Thermostat nach einem der vorhergehenden Ansprüche, **dadurch gekennzeichnet, dass** der Hohlkörper (2, 23, 38, 53) im Wesentlichen aus einem Material gefertigt ist, welches eine Wärmeleitfähigkeit von weniger als 50 W/mK aufweist, dabei vorzugsweise von weniger als 25 W/mK.

8. Thermostat nach einem der vorhergehenden Ansprüche, **dadurch gekennzeichnet, dass** das Heizelement (3) mittels eines elektrisch isolierenden und thermisch leitenden Klebemittels (4) an einer Außenfläche des Hohlkörpers (2) befestigt ist.

9. Thermostat nach einem der vorhergehenden Ansprüche, **dadurch gekennzeichnet, dass** das Heizelement (3, 15, 35) durch ein PTC-Heizelement gebildet ist.

10. Thermostat nach einem der vorhergehenden Ansprüche 1 bis 8, **dadurch gekennzeichnet, dass** das Heizelement (55) durch einen auf bzw. an einem Formkörper (63) angeordneten Heizdraht und/oder ein Heizblech gebildet ist.

11. Thermostat nach einem der vorhergehenden Ansprüche, **dadurch gekennzeichnet, dass** das Heizelement (55) mit einem Formteil (57) verbunden ist, welches Aussparungen (60) für die elektrischen Kontaktierungen des Heizelementes (55) aufweist.

12. Thermostat nach einem der vorhergehenden Ansprüche, **dadurch gekennzeichnet, dass** der Hohlkörper (2, 23, 38, 53) eine Öffnung aufweist, welche dem Heizelement (3, 15, 35, 55) im Wesentlichen gegenüberliegend angeordnet ist, wobei durch die Öffnung ein Kolbenelement (6) geführt ist, welches in der Öffnung beweglich gelagert ist, wobei eine aus einer Volumenänderung des thermosensiblen Mediums (5, 14, 34, 54) resultierende Kraftkomponente auf das Kolbenelement (6) übertragbar ist.
